# FASCICULE DE BREVET EUROPEEN

(11) **EP 2 983 966 B1**
(45) Date de publication et mention de la délivrance du brevet: **17.05.2017**
(21) Numéro de dépôt: 14721444.9
(22) Date de dépôt: 31.03.2014
(51) Int. Cl.: B62D 25/08, B60S 1/48, B60R 13/07

(54) **ENSEMBLE COMPRENANT UN COLLECTEUR D'AUVENT EN MATIERE PLASTIQUE ET UNE GRILLE D'AUVENT EN MATIERE PLASTIQUE DESTINEE A ETRE FIXEE SUR LEDIT COLLECTEUR D'AUVENT POUR RECOUVRIR CELUI-CI**
ANORDNUNG MIT EINEM HAUBENKOLLEKTOR AUS EINEM KUNSTSTOFFMATERIAL UND EINEM HAUBENGITTER AUS EINEM KUNSTSTOFFMATERIAL ZUR BEFESTIGUNG AN DIESEM HAUBENKOLLEKTOR ZUR ABDECKUNG DAVON
ASSEMBLY COMPRISING A COWL COLLECTOR MADE FROM A PLASTIC MATERIAL AND A COWL GRILLE MADE FROM A PLASTIC MATERIAL INTENDED TO BE FIXED TO SAID COWL COLLECTOR IN ORDER TO COVER SAME

(30) Priorité: 11.04.2013 FR 1353265
(43) Date de publication de la demande: 17.02.2016
(73) Titulaire: Peugeot Citroën Automobiles SA, 78140 Vélizy Villacoublay (FR)
(72) Inventeur: TAVERNIER, Luc, F-25470 Trevillers (FR); KELLER, Sylvain, F-68210 Traubach Le Haut (FR)
(74) Mandataire: Fosse, Danièle
(86) Numéro de dépôt international: PCT/FR2014/050763
(87) Numéro de publication internationale: WO 2014/167210

(56) Documents cités:
- EP-A1- 1 787 869
- EP-A1- 2 112 026
- FR-A1- 2 668 110
- US-A1- 2006 202 516

## Description

La présente invention concerne un ensemble comprenant un collecteur d'auvent en matière plastique et une grille d'auvent en matière plastique destinée à être fixée sur ledit collecteur d'auvent pour recouvrir celui-ci. Le document US 2006/0202516 divulgue le préambule de la revendication 1. L'invention concerne également un véhicule automobile équipé d'un tel ensemble.

Dans les ensembles connus de ce type, la grille d'auvent porte généralement sur sa face intérieure destinée à recouvrir le collecteur d'auvent, le tuyau souple d'alimentation en eau des gicleurs de lavage du pare-brise qui débouchent sur la face extérieure de la grille d'auvent.

Lorsque la grille et le collecteur d'auvent sont montés sur le véhicule, le tuyau souple débouche à l'extérieur de l'ensemble grille-collecteur par un passage important qui peut transmettre vers l'habitacle les bruits générés dans le compartiment moteur.

Le but de la présente invention est de remédier à cet inconvénient.

Ce but est atteint, selon l'invention, grâce à un ensemble comprenant un collecteur d'auvent en matière plastique et une grille d'auvent en matière plastique destinée à être fixée sur ledit collecteur d'auvent pour recouvrir celui-ci, ladite grille d'auvent portant sur sa face intérieure destinée à recouvrir le collecteur d'auvent, le tuyau souple d'alimentation en eau des gicleurs de lavage du pare-brise d'un véhicule automobile, ce tuyau souple débouchant à l'extérieur de l'ensemble, lorsqu'il est monté, par un passage compris entre le tuyau, le collecteur et la grille d'auvent, caractérisé en ce que la grille d'auvent comporte dans une zone située près de la périphérie de cette grille des moyens de maintien du tuyau souple, la grille d'auvent et le collecteur d'auvent comportant des moyens coopérant ensemble par conjugaison de forme pour obturer sensiblement complètement ledit passage afin d'assurer l'étanchéité acoustique de celui-ci

Selon une version préférée de l'invention, l'ensemble comporte en outre une partie sur laquelle peut venir en contact la portion dudit tuyau qui est maintenue par lesdits moyens de maintien, lors du montage de la grille d'auvent sur ledit collecteur d'auvent.

Cette partie peut être distincte du collecteur d'auvent.

De préférence, ladite partie est constituée par un bloc en matière souple destiné à être fixé près d'une extrémité latérale du collecteur d'auvent.

Le fait que le tuyau souple puisse prendre appui sur une matière souple permet d'obtenir une excellente étanchéité acoustique.

Dans une version particulièrement avantageuse de l'invention, ledit bloc en matière souple comprend une nervure en saillie sur laquelle peut s'appuyer la portion dudit tuyau lors du montage de ladite grille sur le collecteur d'auvent.

Cette nervure permet de déformer le tuyau souple et d'obtenir ainsi une étanchéité optimale.

Dans un mode de réalisation, lorsque la grille d'auvent est montée, ladite portion du tuyau souple s'étend dans une direction transversale par rapport à la nervure.

De préférence également, le bloc en matière souple comprend un épaulement s'étendant sensiblement parallèlement à ladite extrémité latérale du collecteur d'auvent et formant avec cette extrémité une gorge apte à recevoir ladite portion du tuyau souple et les moyens de maintien de celui-ci.

Lorsque la grille d'auvent est montée, le tuyau souple et les moyens de maintien de celui-ci sont engagés dans la gorge ci-dessus en remplissant sensiblement complètement le passage évoqué plus haut.

Dans un mode de réalisation, lesdits moyens de maintien du tuyau souple comprennent deux parois faisant saillie sur la face intérieure de la grille d'auvent présentant chacune un trou circulaire dans lequel est engagé ledit tuyau.

De préférence également, les deux parois ci-dessus sont fixées sur une partie courbe de la face intérieure de la grille d'auvent, de façon à maintenir le tuyau souple suivant une courbure correspondant à ladite partie courbe.

Selon une autre particularité de l'invention, lesdites deux parois sont reliées entre elles par deux autres parois s'étendant de part et d'autre dudit tuyau souple.

Selon un autre aspect, l'invention concerne également un véhicule comportant un ensemble collecteur et grille d'auvent selon l'invention.

D'autres particularités et avantages de l'invention apparaîtront encore tout au long de la description ci-après.

Aux dessins annexés, donnés à titre d'exemples, non limitatifs :
- la figure 1 est une vue en perspective montrant le dessus d'un collecteur d'auvent monté dans un véhicule automobile,
- la figure 2 est une vue du dessus d'une grille d'auvent non encore montée sur le collecteur d'auvent,
- la figure 3 est une vue du dessous de la grille d'auvent représentée sur la figure 2,
- la figure 4 est une vue analogue à la figure 1 montrant la grille d'auvent montée sur le collecteur d'auvent,
- la figure 5 est une vue agrandie de la partie gauche de la figure 1, montrant le trajet du tuyau souple d'alimentation des gicleurs de lave-glace,
- la figure 6 est une vue de détail de la figure 5, le tuyau souple étant enlevé,
- la figure 7 est une vue agrandie montrant la zone représentée sur la figure 6 après montage de la grille d'auvent,
- la figure 8 est une vue en coupe suivant le plan VIII-VIII de la figure 7.

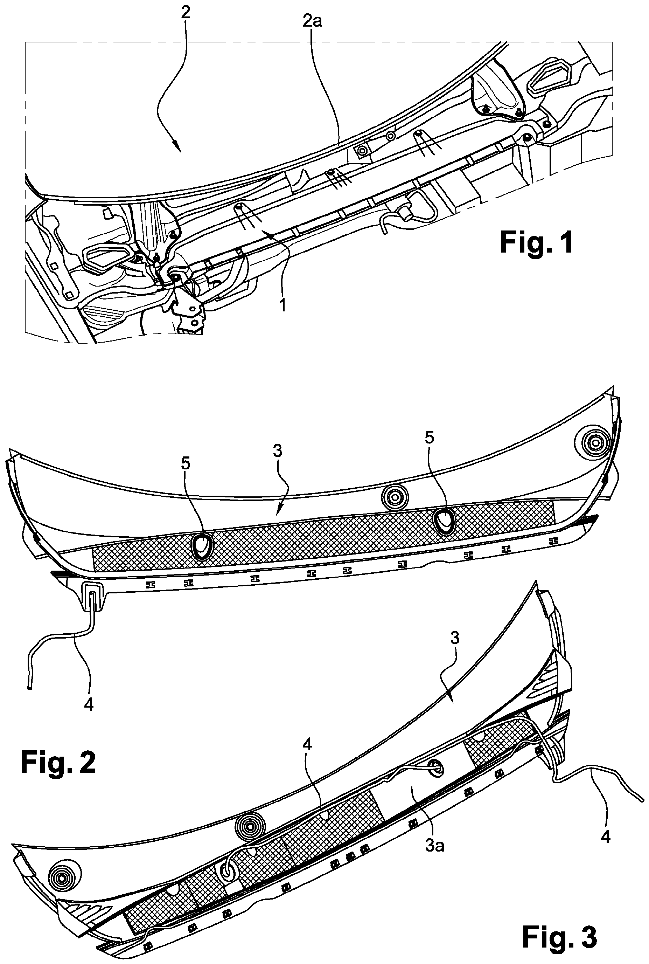

La figure 1 montre le collecteur d'auvent 1 en matière plastique monté dans un véhicule automobile devant le pare-brise 2 et sous le bord inférieur 2a de celui-ci.

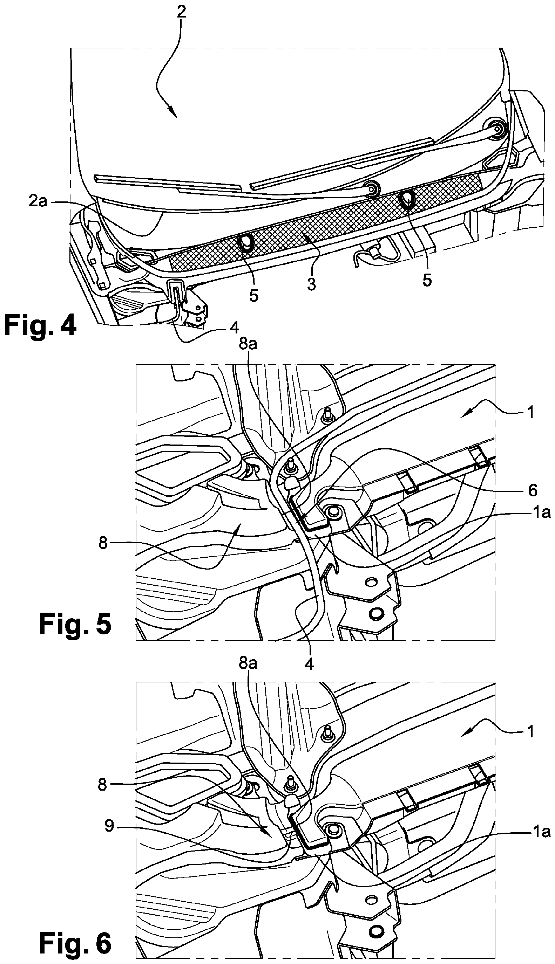

Les figures 2 et 3 montrent la grille d'auvent 3 en matière plastique, destinée à être fixée sur le collecteur d'auvent 1 pour recouvrir celui-ci, comme montré sur la figure 4.

Les moyens pour fixer la grille 3 sur le collecteur d'auvent 1 peuvent être des vis ou des agrafes.

Comme on le voit sur la figure 3, la grille d'auvent 3 porte sur sa face intérieure 3a destinée à recouvrir le collecteur d'auvent 1, le tuyau souple 4 d'alimentation en eau des gicleurs 5 de lavage (voir figure 2) du pare-brise 2 du véhicule automobile.

Le tuyau souple 4 débouche à l'extérieur de l'ensemble collecteur-grille, lorsqu'il est monté sur le véhicule, par un passage 6 visible sur les figures 5 et 6, compris entre le tuyau 4, le collecteur 1 et la grille 3 d'auvent.

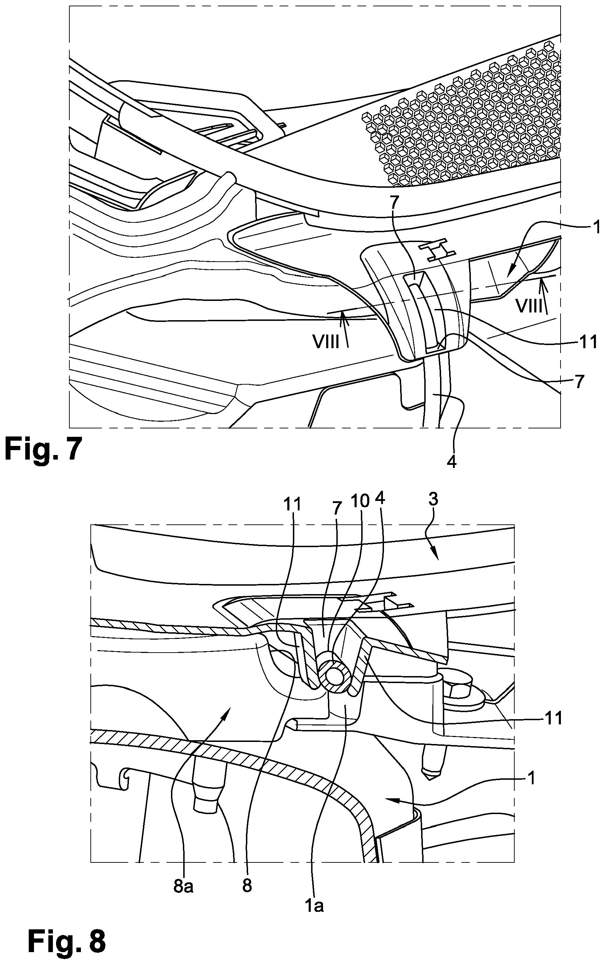

Conformément à l'invention, la grille d'auvent 3 comporte (voir figures 7 et 8) dans une zone située près de la périphérie de cette grille 3 des moyens 7 de maintien du tuyau souple 4, qui seront détaillés plus loin.

La grille d'auvent 3 et le collecteur d'auvent 1 comportent des moyens coopérant ensemble par conjugaison de forme pour obturer sensiblement complètement le passage 6 afin d'assurer l'étanchéité acoustique de celui-ci.

Ces moyens d'étanchéité acoustique seront également détaillés plus loin.

L'ensemble selon l'invention comporte en outre (voir figures 5, 6, 8) une partie 8 sur laquelle peut venir en contact la portion du tuyau 4 qui est maintenue par les moyens de maintien 7, lors du montage de la grille d'auvent 3 sur le collecteur d'auvent 1.

Dans l'exemple représenté, la partie 8 est constituée par un bloc en matière souple, telle que de la mousse, destinée à être fixée près d'une extrémité latérale 1 a du collecteur d'auvent 1, comme indiqué sur les figures 5 et 6.

Comme on le voit sur la figure 6, le bloc en matière souple 8 comprend une nervure en saillie 9 sur laquelle peut s'appuyer la portion du tuyau souple 4 lors du montage de la grille 3 sur le collecteur d'auvent 1.

Lorsque la grille d'auvent 3 est montée, le tuyau souple 4 s'étend dans une direction transversale par rapport à la nervure 9.

Par ailleurs, le bloc 8 en matière souple comprend un épaulement 8a (voir figures 5, 6, 8) s'étendant sensiblement parallèlement à l'extrémité latérale 1a du collecteur d'auvent 1 et formant avec cette extrémité 1 a une gorge apte à recevoir le tuyau souple 4 et les moyens de maintien 7 de celui-ci.

Comme montré sur les figures 7 et 8, les moyens de maintien du tuyau souple 4 comprennent deux parois 7 faisant saillie sur la face intérieure de la grille d'auvent 3 et présentant chacune (voir figure 8) un trou circulaire 10 dans lequel est engagé le tuyau 4.

Les figures 7 et 8 montrent en outre que les deux parois 7 sont fixées sur une partie courbe de la face intérieure de la grille d'auvent 3, de façon à maintenir le tuyau souple 4 suivant une courbure correspondant à la partie courbe ci-dessus.

Cette courbure permet de guider le tuyau souple 4 vers le bas du compartiment moteur.

De plus, ces deux parois 7 sont reliées entre elles par deux autres parois 11 s'étendant de part et d'autre du tuyau souple 4.

Ces deux parois 11 sont légèrement évasées vers le haut et forment avec les deux parois 7 un volume qui s'emboîte dans la gorge définie par le passage 6 décrit plus haut.

Cet emboîtement obture le passage 6 et permet d'empêcher la transmission des bruits générés dans le compartiment moteur vers l'habitacle du véhicule.

## Revendications

1. Ensemble comprenant un collecteur d'auvent (1) en matière plastique et une grille d'auvent (3) en matière plastique destinée à être fixée sur ledit collecteur d'auvent (1) pour recouvrir celui-ci, ladite grille d'auvent (3) portant sur sa face intérieure destinée à recouvrir le collecteur d'auvent (1), un tuyau souple (4) d'alimentation en eau des gicleurs de lavage (5) du pare-brise d'un véhicule automobile, **caractérisé en ce que** le tuyau souple (4) débouchant à l'extérieur de l'ensemble, lorsqu'il est monté, par un passage (6) compris entre le tuyau (4), le collecteur (1) et la grille d'auvent (3), et **en ce que** la grille d'auvent (3) comporte dans une zone située près de la périphérie de cette grille (3) des moyens (7) de maintien du tuyau souple (4), la grille d'auvent (3) et le collecteur d'auvent (1) comportant des moyens coopérant ensemble par conjugaison de forme pour obturer sensiblement complètement ledit passage (6) afin d'assurer l'étanchéité acoustique de celui-ci.

2. Ensemble selon la revendication 1, **caractérisé en ce qu'**il comporte en outre une partie (8) sur laquelle peut venir en contact la portion dudit tuyau (4) qui est maintenue par lesdits moyens de maintien (7), lors du montage de la grille d'auvent (3) sur ledit collecteur d'auvent (1).

3. Ensemble selon la revendication 2, **caractérisé en ce que** ladite partie (8) est constituée par un bloc en matière souple destiné à être fixé près d'une extrémité latérale (1 a) du collecteur d'auvent (1).

4. Ensemble selon la revendication 3, **caractérisé en ce que** ledit bloc (8) en matière souple comprend une nervure en saillie (9) sur laquelle peut s'appuyer la portion dudit tuyau (4) lors du montage de ladite grille (3) sur le collecteur d'auvent (1).

5. Ensemble selon la revendication 4, **caractérisé en ce que**, lorsque la grille d'auvent (3) est montée, ladite portion du tuyau souple (4) s'étend dans une direction transversale par rapport à la nervure (9).

6. Ensemble selon l'une des revendications 3 à 5, **caractérisé en ce que** le bloc en matière souple (8) comprend un épaulement (8a) s'étendant sensiblement parallèlement à ladite extrémité latérale (1a) du collecteur d'auvent (1) et formant avec cette extrémité (1a) une gorge apte à recevoir ladite portion du tuyau souple (4) et les moyens (7) de maintien de celui-ci.

7. Ensemble selon l'une des revendications 1 à 6, **caractérisé en ce que** lesdits moyens de maintien du tuyau souple (4) comprennent deux parois (7) faisant saillie sur la face intérieure de la grille d'auvent (3) présentant chacune un trou circulaire (10) dans lequel est engagé ledit tuyau (4).

8. Ensemble selon la revendication 7, **caractérisé en ce que** les deux parois (7) sont fixées sur une partie courbe de la face intérieure de la grille d'auvent (3), de façon à maintenir le tuyau souple (4) suivant une courbure correspondant à ladite partie courbe.

9. Ensemble selon l'une des revendications 7 ou 8, **caractérisé en ce que** lesdites deux parois (7) sont reliées entre elles par deux autres parois (11) s'étendant de part et d'autre dudit tuyau souple (4).

10. Véhicule automobile comportant un ensemble selon l'une des revendications 1 à 9.

## Patentansprüche

1. Anordnung, die einen Haubenkollektor (1) aus Kunststoff und ein Haubengitter (3) aus Kunststoff, das dazu bestimmt ist, auf dem Haubenkollektor (1) befestigt zu sein, um diesen abzudecken, umfasst, wobei das Haubengitter (3) auf seiner Innenseite, die dazu bestimmt ist, den Haubenkollektor (1) abzudecken, einen biegsamen Wasserversorgungsschlauch (4) der Waschspritzdüsen (5) der Windschutzscheibe eines Kraftfahrzeugs trägt, **dadurch gekennzeichnet, dass** der biegsame Schlauch (4) aus der Anordnung, wenn er montiert ist, durch eine Passage (6), die zwischen dem Schlauch (4), dem Haubenkollektor (1) und dem Haubengitter (3) liegt, heraus mündet, und dass das Haubengitter (3) in einer Zone, die nahe der Peripherie dieses Haubengitters (3) liegt, Mittel (7) zum Halten des biegsamen Schlauchs (4) und des Haubengitters (3) umfasst, und der Haubenkollektor (1) Mittel umfasst, die durch Konjugieren der Form zusammenwirken, um die Passage (6) im Wesentlichen vollständig zu verschließen, um ihre akustische Abdichtung sicherzustellen.

2. Anordnung nach Anspruch 1, **dadurch gekennzeichnet, dass** sie außerdem einen Teil (8) umfasst, auf dem der Abschnitt des Schlauchs (4), der von den Haltemitteln (7) gehalten wird, bei der Montage des Haubengitters (3) auf den Haubenkollektor (1) zur Berührung kommen kann.

3. Anordnung nach Anspruch 2, **dadurch gekennzeichnet, dass** der Teil (8) aus einem elastischen Materialblock besteht, der dazu bestimmt ist, nahe einem seitlichen Ende (1a) des Haubenkollektors (1) befestigt zu sein.

4. Anordnung nach Anspruch 3, **dadurch gekennzeichnet, dass** der Block (8) aus elastischem Material eine vorstehende Rippe (9) umfasst, auf der sich der Abschnitt des Schlauchs (4) bei der Montage des Gitters (3) auf den Haubenkollektor (1) stützen kann.

5. Anordnung nach Anspruch 4, **dadurch gekennzeichnet, dass**, wenn das Haubengitter (3) montiert ist, der Abschnitt des biegsamen Schlauchs (4) sich in eine Richtung quer zu der Rippe (9) erstreckt.

6. Anordnung nach einem der Ansprüche 3 bis 5, **dadurch gekennzeichnet, dass** der Block (8) aus elastischem Material einen Ansatz (8a) umfasst, der sich im Wesentlichen parallel zu dem seitlichen Ende (1a) des Haubenkollektors (1) erstreckt und mit diesem Ende (1a) eine Nut bildet, die geeignet ist, um den Abschnitt des biegsamen Schlauchs (4) und dessen Haltemittel (7) aufzunehmen.

7. Anordnung nach einem der Ansprüche 1 bis 6, **dadurch gekennzeichnet, dass** die Haltemittel des biegsamen Schlauchs (4) zwei Wände (7) umfassen, die auf der Innenseite des Haubengitters (3) vorstehen, die jeweils eine kreisförmige Bohrung (10) aufweisen, in die der Schlauch (4) eingefügt ist.

8. Anordnung nach Anspruch 7, **dadurch gekennzeichnet, dass** die zwei Wände (7) auf einem gebogenen Teil der Innenseite des Haubengitters (3) derart befestigt sind, dass sie den biegsamen Schlauch (4) gemäß einer Krümmung, die dem gebogenen Teil entspricht, halten.

9. Anordnung nach einem der Ansprüche 7 oder 8, **dadurch gekennzeichnet, dass** die zwei Wände (7) miteinander durch zwei andere Wände (11), die sich zu beiden Seiten des biegsamen Schlauchs (4) erstrecken, verbunden sind.

10. Kraftfahrzeug, das eine Anordnung nach einem der Ansprüche 1 bis 9 umfasst.

## Claims

1. An assembly comprising a cowl collector (1) made from a plastic material and a cowl grille (3) made from a plastic material intended to be fixed to said cowl collector (1) in order to cover same, said cowl grille (3) carrying, on the inner face of same intended to cover the cowl collector (1), a flexible pipe (4) for supplying water to the nozzles (5) for washing the windscreen of a motor vehicle, **characterized in that** the flexible pipe (4) opening on the outside of the assembly, when mounted, via a passage (6) included between the pipe (4), the collector (1) and the cowl grille (3), and **in that** the cowl grille (3) comprises, in an area located close to the periphery of said grille (3), means (7) for holding the flexible pipe (4), the cowl grille (3) and the cowl collector (1) comprising means cooperating together by form locking to substantially completely block said passage (6) in order to ensure the acoustic sealing of same.

2. The assembly according to Claim 1, **characterized in that** it further comprises a part (8) on which the portion of said pipe (4) can come into contact which is held by said holding means (7), on the mounting of the cowl grille (3) on said cowl collector (1).

3. The assembly according to Claim 2, **characterized in that** said part (8) is constituted by a block of flexible material, intended to be fixed close to a lateral end (1a) of the cowl collector (1).

4. The assembly according to Claim 3, **characterized in that** said block (8) of flexible material includes a projecting rib (9) on which the portion of said pipe (4) can rest on mounting of said grille (3) on the cowl collector (1).

5. The assembly according to Claim 4, **characterized in that**, when the cowl grille (3) is mounted, said portion of the flexible pipe (4) extends in a transverse direction with respect to the rib (9).

6. The assembly according to one of Claims 3 to 5, **characterized in that** the block of flexible material (8) includes a shoulder (8a) extending substantially parallel to said lateral end (1a) of the cowl collector (1) and forming with this end (1a) a groove able to be receive said portion of the flexible pipe (4) and the holding means (7) thereof.

7. The assembly according to one of Claims 1 to 6, **characterized in that** said holding means of the flexible pipe (4) include two walls (7) projecting on the interior face of the cowl grille (3), each having a circular hole (10) in which said pipe (4) is engaged.

8. The assembly according to Claim 7, **characterized in that** the two walls (7) are fixed on a curved part of the interior face of the cowl grille (3), so as to hold the flexible pipe (4) following a curve corresponding to said curved part.

9. The assembly according to one of Claims 7 or 8, **characterized in that** said two walls (7) are connected to one another by two other walls (11) extending on either side of said flexible pipe (4).

10. A motor vehicle comprising an assembly according to one of Claims 1 to 9.
